# EUROPÄISCHE PATENTSCHRIFT

(11) **EP 1 766 430 B1**
(45) Veröffentlichungstag und Bekanntmachung des Hinweises auf die Patenterteilung: **13.10.2010**
(21) Anmeldenummer: 05739521.2
(22) Anmeldetag: 27.04.2005
(51) Int. Cl.: G01S 5/18, G01S 3/80, G01S 5/00

(54) **PRÜFVERFAHREN FÜR EIN VERFAHREN ZUR PASSIVEN GEWINNUNG VON ZIELPARAMETERN**
TESTING METHOD, AND METHOD FOR PASSIVELY OBTAINING TARGET PARAMETERS
PROCEDE DE VERIFICATION POUR METHODE D'ACQUISITION PASSIVE DE PARAMETRES DE CIBLE

(30) Priorität: 28.05.2004 DE 102004026304
(43) Veröffentlichungstag der Anmeldung: 28.03.2007
(73) Patentinhaber: ATLAS ELEKTRONIK GMBH, 28305 Bremen (DE)
(72) Erfinder: STEIMEL, Ulrich, 28876 Oyten (DE)
(74) Vertreter: Wasiljeff, Johannes M.B.
(86) Internationale Anmeldenummer: PCT/EP2005/004476
(87) Internationale Veröffentlichungsnummer: WO 2005/119291

(56) Entgegenhaltungen:
- DE-A1- 4 431 851
- DE-A1- 10 129 726
- DE-C1- 4 213 121
- VLIEGER J H DE ET AL: "MAXIMUM LIKELIHOOD ESTIMATION FOR LONG-RANGE TARGET TRACKING USING PASSIVE SONAR MEASUREMENTS" IEEE TRANSACTIONS ON SIGNAL PROCESSING, IEEE, INC. NEW YORK, US, Bd. 40, Nr. 5, 1. Mai 1992 (1992-05-01), Seiten 1216-1227, XP000300968 ISSN: 1053-587X

## Beschreibung

Die Erfindung betrifft ein Prüfverfahren für ein Verfahren zur passiven Gewinnung von Zieldaten eines sich bewegenden, Wellenenergie, insbesondere Schall, abstrahlenden Ziels, mit dem an aufeinanderfolgenden Bahnpositionen eines Fahrzeugs, insbesondere eines Wasserfahrzeugs, das seine Bahnpositionen mit einem bordautonomen Navigationssystem, insbesondere einem Koppelnavigationssystem, bestimmt, durch Peilen des Ziels mittels einer bordgestützten Peilanlage als Ist-Zieldaten Peilwinkel gemessen und daraus Zielentfernung, Zielgeschwindigkeit, Zielkurs und/oder Zielposition als weitere Ist-Zieldaten bestimmt werden.

Um von einem Fahrzeug, z.B. einem U-Boot oder einem Oberflächenschiff, aus ohne Eigenverrat die Position, Geschwindigkeit und Kurs eines Ziels, z.B. eines Oberflächenschiffs, eines U-Boots oder eines Torpedos, als sog. Zieldaten zu bestimmen, wird bei einem als TMA-Verfahren (Target Motion Analysis-Verfahren) bekannten Verfahren zur passiven Zieldatenbestimmung (DE 101 29 726 A1) mit einer Sonar-Peilanlage vom Ziel abgestrahlter Schall empfangen und der Peilwinkel zum Ziel gemessen. Aus diesem Peilwinkel wird zusammen mit der Bahn- oder Eigenposition des Fahrzeugs ausgehend von einer Anfangsposition fortlaufend eine Position des Ziels geschätzt, die das mit einer geschätzten Zielgeschwindigkeit fahrende Ziel nach einem Zeitintervall einnehmen wird, und ein zugehöriger geschätzter Peilwinkel berechnet. Iterativ wird die Differenz zwischen dem gemessenen und dem geschätzten Peilwinkel solange verkleinert, bis eine Fehlergrenze unterschritten ist, der geschätzte Peilwinkel also dem gemessenen Peilwinkel bis auf die Fehlertoleranz entspricht. Die zugrundeliegende geschätzte Position wird als Zielposition erkannt. Aus Peilwinkel und Zielposition wird die geschätzte Entfernung zum Ziel, Zielgeschwindigkeit und Zielkurs berechnet. Die Bestimmung der Eigen- oder Bahnpositionen des Fahrzeugs erfolgt in bekannter Weise mit einem bordautonomen Navigationssystem, üblicherweise mit einem Koppelnavigationssystem, mit dem Fahrtrichtung und zurückgelegte Fahrstrecke über eine Geschwindigkeitsmessung des Fahrzeugs bestimmt werden. Die Geschwindigkeit wird mit einem Dopplerlog ermittelt, bei dem Wellenenergie gerichtet gesendet und dopplerverschoben nach Reflexion am Boden oder an Schichtungen des Übertragungsmediums empfangen wird. Die Dopplerverschiebung ist ein Maß für die Geschwindigkeit. Dopplerlogs auf Wasserfahrzeugen senden Schallwellen aus, die beim "Bottom-Track" vom Meeresboden und beim "Water-Track" von Wasserschichten reflektiert werden. Beim "Water-Track" liefert die Koppelnavigation von der Strömung im Messgebiet abhängige verströmte Bahnpositionen, die mit Strömungsdaten aus Strömungsatlanten korrigiert werden, um die wahre Eigenposition des Fahrzeugs aus der gemessenen Bahnposition zu ermitteln.

Zum Nachweis der Funktionstüchtigkeit eines solchen TMA-Verfahrens wird ein sog. SAT (Sea Acceptance Test) durchgeführt, bei dem ein oder mehrere Ziele mit einem oder mehreren Sensoren einer Sonar-Peilanlage vom Fahrzeug aus gepeilt werden. Mit dem TMA-Verfahren werden aus den mit den Peilungen gewonnenen, nordbezogenen Peilwinkeln Zielentfernungen und Zielgeschwindigkeit, Zielkurs und Zielposition als Zieldaten geschätzt, die nach einer bestimmten Einlaufzeit (run-in-time) bestimmte Fehlertoleranzen für den Funktionsnachweis erreichen müssen.

Ein Verfahren gemäss dem Oberbegriff des Anspruchs 1 ist im Dokument DE 44 31 851 A1 offenbart.

Der Erfindung liegt die Aufgabe zugrunde ein bei einem SAT einsetzbares Prüfverfahren anzugeben, mit dem die Abnahme eines Verfahrens zur passiven Bestimmung von Zieldaten schnell und vorzugsweise online durchgeführt werden kann.

Die Aufgabe ist erfindungsgemäß durch die Merkmale im Anspruch 1 gelöst.

Das erfindungsgemäße Verfahren hat den Vorteil, dass die Funktionstüchtigkeit des zu prüfenden Verfahrens schon während des Testlaufs auf See beurteilt werden kann und bei unzureichenden Ergebnissen ein oder mehrere Wiederholungstests sofort angeschlossen werden können, so dass der SAT zeitlich begrenzt wird. Dies bedeutet eine wesentliche Kosteneinsparung, da jeder für den SAT erforderliche Tag auf See mit Eigenboot als dem die Peilanlage tragenden Fahrzeug und einem oder mehreren Zielschiffen mit hohen Kosten verbunden ist. Das land- oder satellitengestützte Positionsvermessungssystem auf dem nicht getauchten Eigenboot und dem als Referenzziel verwendeten Zielschiff liefert erdbezogene Positionswerte mit hoher Genauigkeit, aus denen sehr exakte absolute Werte für Peilwinkel und Zielentfernung berechnet werden können. Diese absoluten Werte von Peilwinkel und Zielentfernung, die zu den gleichen Zeitpunkten bestimmt worden sind wie die Peilungen der Peilanlage für das TMA-Verfahren, werden den Bahnpositionen zugeordnet, die das Fahrzeug mit dem bordautonomen Navigationssystem zu den Zeitpunkten der Peilungen für das TMA-Verfahren ermittelt hat. Mit den Bahnpositionen und den diesen zugeordneten Wertepaaren werden Zielpositionen berechnet und daraus, z.B. mittels Kalmanfilter, eine geglättete Referenz-Zielbahn geschätzt. Aus der Referenz-Zielbahn werden wiederum Referenz-Peilwinkel, Referenz-Zielposition, Referenz-Zielentfernungen, Referenz-Zielgeschwindigkeit und/oder Referenz-Zielkurs abgeleitet und mit den mit dem TMA-Verfahren gewonnenen entsprechenden Ist-Zieldaten verglichen. Konvergiert die Abweichung der Referenzwerte von den Istwerten gegen einen vorgegebenen Fehler, ist das Prüfergebnis positiv. Durch diese Verfahrensweise ist es möglich, die mit dem TMA-Verfahren geschätzten sog. Ist-Zieldaten durch direkten Vergleich mit den Referenz-Zieldaten zu bewerten. Da zum Berechnen der Referenz-Zielbahn die gleiche Eigenbahn des Fahrzeugs benutzt wird, entlang der das TMA-Verfahren eingesetzt wird, brauchen Umwelteinflüsse nicht berücksichtigt zu werden. So muss z.B. eine Verströmung des Fahrzeugs, die die vom bordautonomen Navigationssystem ermittelten Bahnpositionen beeinflusst, nicht wie bei bekannten Prüfverfahren durch Korrekturrechnungen eliminiert werden. Darüber hinaus besteht die Möglichkeit, bei gestörten Angaben der Positionswerte des Ziels, z. B. infolge von Störungen in der Funkverbindung zwischen Ziel und Fahrzeug, alle gemessenen Peilwinkel und daraus ermittelte Ist-Zieldaten zu speichern und weitere Testläufe durchzuführen. Die abgespeicherten Zieldaten können jederzeit wieder eingelesen und so der unterbrochene Abnahmelauf abgeschlossen werden. Das erfindungsgemäße Prüfverfahren bietet zudem den Vorteil, dass der Einlauf der mit dem TMA-Verfahren geschätzten Zieldaten in die vorgegebene Fehlertoleranz online bewertet werden kann.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

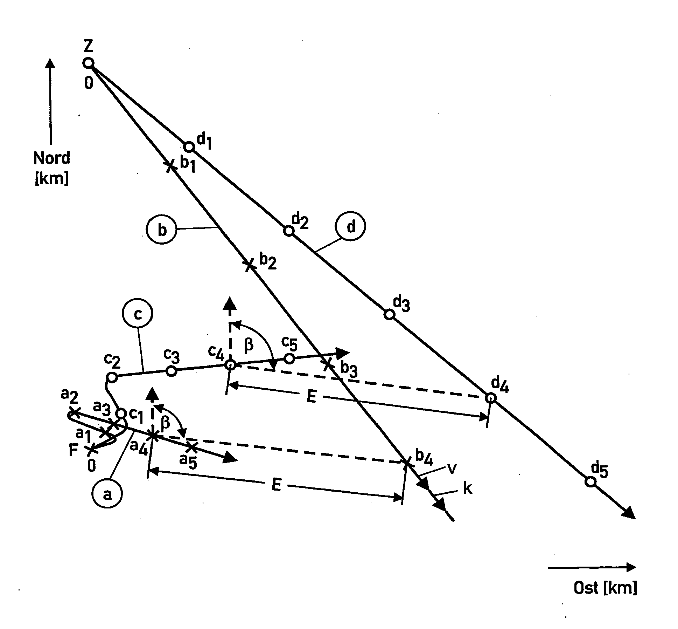

Die Erfindung ist anhand eines in der Zeichnung illustrierten Ausführungsbeispiels im folgenden näher beschrieben. Dabei zeigt die Zeichnung ein SAT-Szenario in einem Seegebiet mit einem fahrenden Fahrzeug F und einem fahrenden Ziel Z.

Das Fahrzeug F besitzt eine Sonar-Empfangsanlage, mit der vom Ziel Z abgestrahlter Schall empfangen wird. Durch eine richtungsselektive Signalverarbeitung wird die Einfallsrichtung des Schalls als Peilwinkel gegenüber der geographischen Nordrichtung zum Ziel bestimmt. Die Bestimmung der Peilwinkel erfolgt in aufeinanderfolgenden Messzeitpunkten tᵢ (i=0, 1, 2....5), in denen das Fahrzeug F aufgrund seiner Fahrgeschwindigkeit und seines Kurses z.B. die Bahnpositionen 0, a1 bis a5 auf seiner Eigenbahn (Kurve a) einnimmt, wie sie vom Fahrzeug durch Koppelnavigation unter Benutzung von Kreisel zur Richtungsmessung, Dopplerlog zur Geschwindigkeitsmessung und ggf. Beschleunigungs- und Neigungsmesser berechnet wird. Zum Zeitpunkt t₀ beginnt der Verfahrenstest mit der Messung des ersten Peilwinkels zum Ziel Z. Zum Messzeitpunkt t₀ hat das Fahrzeug F die Position 0 eingenommen. Zum Messzeitpunkt t₁ und t₂ führt das Fahrzeug F ein Manöver aus.

Zum Messzeitpunkt t₀ befindet sich das Ziel Z an der Position 0 und wird von dem in seiner Anfangsposition 0 sich befindlichen Fahrzeug F unter dem Peilwinkel 0° in Nordrichtung gepeilt. Das Ziel Z läuft mit konstanter Zielgeschwindigkeit und konstantem Zielkurs, ausgehend von seiner Ausgangsposition 0, auf einer Zielbahn d und nimmt zu den Zeitpunkten tᵢ mit i= 1, 2, 3, 4 ...., zu denen es vom Fahrzeug F gepeilt wird, z.B. jeweils die Zielpositionen d1, d2, d3, d4.... ein.

Das Verfahren zur passiven Bestimmung der Zieldaten des Ziels Z, nämlich der Ist-Zieldaten: Zielpeilung, Zielentfernung, Zielposition, Zielkurs und Zielgeschwindigkeit, im folgenden TMA-Verfahren (Target Motion Analysis) genannt, schätzt zu jeder der Bahnpositionen a1 bis a5 des Fahrzeugs F aus dem an der jeweiligen Bahnposition gemessenen Peilwinkel eine Position des Ziels Z und berechnet unter Hinzuziehen einer geschätzten Geschwindigkeit des Ziels Z einen zu der geschätzten Position des Ziels Z zugehörigen geschätzten Peilwinkel zum Ziel Z. Danach wird iterativ die Differenz zwischen dem gemessenen und dem geschätzten Peilwinkel solange verkleinert, bis eine Fehlergrenze unterschritten ist. Die der Unterschreitung der Fehlergrenze zugrundeliegende geschätzte Position wird als Ist-Zielposition, die dazugehörige geschätzte Geschwindigkeit als Ist-Zielgeschwindigkeit und Ist-Zielkurs ausgegeben. Dies wird bei jeder Bahnposition a1 bis a5 des Fahrzeugs F, in der ein Peilwinkel zum Ziel gemessen wird, wiederholt. Die mittels des TMA-Verfahrens erhaltene Zielbahn ergibt die Kurve b mit den Zielpositionen b1 bis b4. Eine ausführliche Beschreibung des TMA-Verfahrens findet sich beispielsweise in der DE 101 29 726 A1.

Zur Prüfung der Funktionsfähigkeit des TMA-Verfahrens werden das mit der Peilanlage für das TMA-Verfahren ausgerüstete Fahrzeug F, z.B. ein U-Boot, das bei SAT im halbgetauchten Zustand fährt, und das als Ziel dienende Überwasserfahrzeug, z.B. ein Oberflächenschiff, jeweils mit einem GPS- oder mit einem genaueren DGPS-Empfänger des satellitengestützten Navigationssystems ausgestattet. Fahrzeug F und Ziel Z stehen miteinander in Funkverbindung. Mit Beginn des Prüfverfahrens werden mittels der GPS-Empfänger die Positionen von Fahrzeug F und Ziel Z hochgenau bestimmt, und zwar immer zu denjenigen Zeitpunkten tᵢ, in denen vom Fahrzeug F aus mit der an Bord befindlichen Sonar-Empfangsanlage Zielpeilungen vorgenommen und auf Nord bezogene Peilwinkel gemessen werden. Die mit dem GPS-Empfänger vermessenen Fahrzeugpositionen 0, c1 bis c5 ergeben die erdkoordinatenbezogene, wahre Eigenbahn des Fahrzeugs F gemäß Kurve c und die mit dem GPS-Empfänger des Ziels Z bestimmten Zielpositionen 0, d1 bis d5 ergeben die erdkoordinatenbezogene, wahre Zielbahn gemäß Kurve d. Die vom GPS-Empfänger des Ziels Z bestimmten Zielpositionen 0, d1 bis d5 werden per Funk an das Fahrzeug F übertragen. Zu jeder der Fahrzeugposition 0, c1 bis c5. (Kurve c) wird zu den Zielpositionen 0, d1 bis d5 (Kurve d) der absolute Peilwinkel gegen Nord und die absolute Entfernung zwischen Fahrzeug F und Ziel Z berechnet. In der Zeichnung ist beispielhaft für den Zeitpunkt t₄, in der das Fahrzeug F die Position c4 (Kurve c) und das Ziel Z die Position d4 (Kurve d) innehaben, der berechnete Peilwinkel mit β und die berechnete Zielentfernung mit E bezeichnet.

Die berechneten absoluten Peilwinkel und absoluten Zielentfernungen werden an die vom Fahrzeug F mittels Koppelnavigation vermessenen Bahnpositionen 0, a1 bis a5 (Kurve a) angebunden, d.h. jeweils die zu den Zeitpunkten tᵢ (i=0...5) berechneten Wertepaare aus Peilwinkel und Zielentfernung werden denjenigen Bahnpositionen 0, a1 bis a5 des Fahrzeugs F zugeordnet, die das Fahrzeug F gemäß dem Ergebnis der Koppelnavigation zu den Zeitpunkten t₀ bis t₅ eingenommen hat. Das ist in der Zeichnung für den Zeitpunkt t₄, zu dem durch Koppelnavigation die Bahnposition a4 des Fahrzeugs F (Kurve a) angegeben worden ist, illustriert, indem an a4 das Wertepaar β und E angetragen ist. Mit allen diesen Wertepaaren und mit den diesen zeitrichtig zugeordneten, durch Koppelnavigation eigenbestimmten Bahnpositionen des Fahrzeugs F wird, z.B. durch Verwendung eines Kalmanfilters, eine geglättete Referenz-Zielbahn geschätzt. Aus der Referenz-Zielbahn werden Referenzwerte für Peilung (Referenz-Peilungen), Zielposition (Referenz-Zielpositionen), Ziel-Entfernung (Referenz-Zielentfernungen), Zielgeschwindigkeit (Referenz-Zielgeschwindigkeit) und/oder Zielkurs (Referenz-Zielkurs) abgeleitet. Wie in der Zeichnung vereinfacht dargestellt ist, ergeben sich die auf der Referenz-Zielbahn b eingetragenen Referenz-Zielpositionen 0, b1 bis b4 und stimmen infolge vereinfachter Darstellung mit den mit dem TMA-Verfahren bestimmten Ist-Zielpositionen 0, b1 bis b4 (Kurve b) überein. Üblicherweise vorhandene Abweichungen sind in der Zeichnung ignoriert.

Zur Prüfung, ob die mit dem TMA-Verfahren geschätzten Ist-Zieldaten den Genauigkeitsanforderungen genügen, also nach einer vorgegebenen Einlaufzeit (run-in-time) bestimmte Fehlertoleranzen erreichen, werden die mit dem TMA-Verfahren gemessenen Ist-Zieldaten mit den entsprechenden Referenz-Zieldaten verglichen und jeweils das Maß der Abweichung bewertet. Hierzu werden beispielsweise die Differenzen der Ist-Peilwinkel und der Referenz-Peilwinkel einerseits und die Differenzen der Ist-Zielentfernungen und der Referenz-Zielentfernungen anderseits gebildet und die zeitliche Konvergenz der Differenzen beurteilt. Gehen die Differenzen nach einer vorgegebenen Zeit gegen Null oder erreichen sie eine vorgegebene Fehlertoleranz, so ist der Funktionsnachweis für das zu prüfende Verfahren erbracht. Wie die Zeichnung zeigt, werden trotz der Verströmung der vom Fahrzeug im Wasser gemessenen Eigenbahn des Fahrzeugs F (Kurve a) gegenüber der mit dem GPS-Empfänger gemessenen wahren Eigenbahn des Fahrzeugs F (Kurve c) über Grund die Zieldaten richtig erfasst, da das Ziel in gleicher Weise verströmt wird. Zur korrekten Prüfung des TMA-Verfahrens brauchen damit Umwelteinflüsse, im Beispiel eine im Testgebiet vorhandene Strömung, nicht rechnerisch eliminiert zu werden, so dass auch deren Kenntnis nicht erforderlich ist.

Zur Bestimmung der Zielposition des Ziels Z im Rahmen des Prüfverfahrens während des SAT kann auch ein auf dem Fahrzeug F installiertes Radar verwendet werden. Mit dem Radar wird zu den Zeitpunkten tᵢ, zu denen das Fahrzeug F jeweils die Bahnposition 0 und a1 bis a5 gemäß Kurve a einnimmt, das fahrende Ziel Z vermessen. Das Radar liefert Peilwinkel und Zielentfernungen, aus denen wiederum, z.B. mittels eines Kalmanfilters, eine Referenz-Zielbahn geschätzt wird. Die weitere Vorgehensweise zur Prüfung ist wie vorstehend beschrieben. Prinzipiell ließe sich mit dem Radar auch Referenz-Zielkurs und Referenz-Zielgeschwindigkeit erfassen und mit den vom TMA-Verfahren geschätzten entsprechenden Ist-Zieldaten vergleichen. Da Referenz-Zielkurs und Referenz-Zielgeschwindigkeit vom Radar jedoch recht ungenau gemessen werden, wird auf ein Heranziehen dieser Referenz-Zieldaten beim Prüfen des TMA-Verfahrens verzichtet.

Eine weitere Möglichkeit der Zielvermessung des SAT zur Gewinnung von Referenz-Zieldaten besteht darin, dass von dem Ziel ein sog. Sonarfisch nachgeschleppt wird. Der Sonarfisch enthält eine Schallimpulsquelle, die mit einem festen Sendetakt Schallimpulse aussendet, die von der auf dem Fahrzeug F installierten Sonaranlage empfangen werden. Die Zeitpunkte der Peilungen vom Fahrzeug aus und die Sendezeitpunkte der Schallimpulsquelle des Sonarfisches sind miteinander synchronisiert. Aus dem Einfallswinkel der empfangenen Schallimpulse wird der Peilwinkel zum Sonarfisch berechnet und aus der Laufzeit der Schallimpulse die Entfernung zwischen Fahrzeug F und Sonarfisch. Bei bekannter Schlepplänge des Sonarfisches, kann aus diesen Werten die zugehörige Zielpeilung und Zielentfernung berechnet werden. In gleicher, wie vorstehend beschriebener Vorgehensweise werden mit den Zielpeilungen und Zielentfernungen eine geglättete Referenz-Zielbahn geschätzt und daraus die genannten Referenz-Zieldaten abgeleitet, die mit dem entsprechenden Ist-Zieldaten des TMA-Verfahrens verglichen werden.

Eine Vermessung des Ziels mittels Radar und Sonarfisch wird dann eingesetzt, wenn die Positionsvermessung von Ziel und Fahrzeug F mit dem GPS Probleme bereitet, z.B. dass die Zielpositionen aufgrund gestörter Funkverbindung zwischen Ziel und Fahrzeug F nicht zum Fahrzeug F übertragen werden können.

## Patentansprüche

1. Prüfverfahren für ein Verfahren zur passiven Gewinnung von Zieldaten eines sich bewegenden, Wellenenergie, insbesondere Schall, abstrahlenden Ziels (Z), mit dem an aufeinanderfolgenden Bahnpositionen eines Fahrzeugs (F), insbesondere eines Wasserfahrzeugs, das seine Bahnpositionen mit einem bordautonomen Navigationssystem, insbesondere einem Koppelnavigationssystem, ermittelt, durch Peilen des Ziels (Z) mittels einer bordgestützten Peilanlage als Ist-Zieldaten Peilwinkel gemessen und daraus Zielentfernung, Zielgeschwindigkeit, Zielkurs und/oder Zielpositionen als weitere Ist-Zieldaten bestimmt werden, **dadurch gekennzeichnet, dass** zu den Zeitpunkten der Zielpeilungen vom Fahrzeug (F) aus die Positionen von Ziel (Z) und Fahrzeug (F) mit einem land- und/oder satellitengestützten Positionsvermessungssystem vermessen werden, das aus den so vermessenen, jeweils einander zugehörigen Positionen von Fahrzeug (F) und Ziel (Z) Peilwinkel und Zielentfernungen berechnet werden, dass aus den Wertepaaren der einander zugehörigen, berechneten Peilwinkel und Zielentfernungen und den diesen Wertepaaren zeitrichtig zugeordneten, mit dem Navigationssystem des Fahrzeugs ermittelten Bahnpositionen eine vorzugsweise geglättete Referenz-Zielbahn geschätzt wird und dass aus der Referenz-Zielbahn Referenz-Peilwinkel, Referenz-Zielpositionen, Referenz-Zielentfernungen, Referenz-Zielgeschwindigkeit und/oder Referenz-Zielkurs abgeleitet und mit den entsprechenden Ist-Zieldaten verglichen werden und das Maß der Abweichung bewertet wird.

2. Prüfverfahren nach Anspruch 1, **dadurch gekennzeichnet, dass** zur Bewertung des Abweichmaßes die Differenz gebildet und deren zeitliche Konvergenz beurteilt wird.

3. Prüfverfahren nach Anspruch 1 oder 2, **dadurch gekennzeichnet, dass** die Positionen von Ziel und Fahrzeug mit einem auf dem Ziel und einem auf dem Fahrzeug installierten GPS-Empfänger des satellitengestützten Positionsvermessungssystems vermessen und die Zielpositionen zu dem Fahrzeug, vorzugsweise durch Funk, übertragen werden.

## Claims

1. A test method for a method for passively obtaining target data about a moving target (z) which is emitting wave energy, in particular sound, by means of which direction angles are measured as actual target data at successive track positions of a vehicle (F), in particular of a water vehicle, which determines its track positions using an on-board autonomous navigation system, in particular an integrated navigation system, by finding the direction of the target (z) by means of an on-board-based direction-finding system, with the target range, the target velocity, the target course and/or the target positions being determined from this as further actual target data, **characterized in that**, at the times at which the directions to the target are determined from the vehicle (F), the positions of the target (z) and vehicle (F) are measured using a land-based and/or satellite-based position-finding measurement system, the direction angles and target ranges are calculated from the positions of the vehicle (F) and target (z) measured in this way and in each case associated with one another, **in that** a preferably smoothed reference target track is estimated from the value pairs of the mutually associated, calculated direction angles and target ranges and the track positions which are associated with these value pairs at the correct time and are determined using the navigation system of the vehicle, and **in that** reference direction angles, reference target positions, reference target ranges, a reference target velocity and/or a reference target course are/is derived from the reference target track and are/is compared with the corresponding actual target data, and the magnitude of the discrepancy is assessed.

2. The test method as claimed in claim 1, **characterized in that** the magnitude of the discrepancy is assessed by forming the difference and by assessing its time convergence.

3. The test method as claimed in claim 1 or 2, **characterized in that** the positions of the target and vehicle are measured using a GPS receiver which is installed on the target and a GPS receiver which is installed on the vehicle, for the satellite-based position-finding measurement system, and the target positions are transmitted to the vehicle, preferably by radio.

## Revendications

1. Procédé de contrôle pour un procédé d'acquisition passive de données de cible d'une cible (Z) mobile émettant de l'énergie ondulatoire, notamment un son, avec lequel un angle de relèvement est déterminé sous la forme de données de cible réelles par relèvement de la cible (Z) au moyen d'un équipement de relèvement embarqué à des positions de trajectoire successives d'un véhicule (F), notamment un véhicule nautique qui détermine ses positions de trajectoire avec un système de navigation autonome embarqué, notamment un système de navigation à l'estime, et une distance de la cible, une vitesse de la cible, une route de la cible et/ou des positions de la cible en sont déduites en tant que données de cible supplémentaires, **caractérisé en ce qu'**aux moments des relèvements de la cible depuis le véhicule (F), les positions de la cible (Z) et du véhicule (F) sont mesurées avec un système de mesure de position à assistance terrestre et/ou satellitaire, que les angles de relèvement et les distances de la cible sont calculés à partir des positions associées à chaque fois l'une à l'autre du véhicule (F) et de la cible (Z), qu'une trajectoire de cible de référence de préférence lissée est estimée à partir des paires de valeurs des angles de relèvement et des distances de la cible associés l'un à l'autre et des positions de trajectoire synchronisées dans le temps avec ces paires de valeurs, déterminées avec le système de navigation du véhicule, et que les angles de relèvement de référence, les positions de cible de référence, les distances de cible de référence, la vitesse de cible de référence et/ou la route de cible de référence sont déduits à partir de la trajectoire de cible de référence puis comparés avec les données de cible réelles et la valeur de l'écart est pondérée.

2. Procédé de contrôle selon la revendication 1, **caractérisé en ce que** pour pondérer la valeur de l'écart, la différence est calculée et sa convergence dans le temps est évaluée.

3. Procédé de contrôle selon la revendication 1 ou 2, **caractérisé en ce que** les positions de la cible et du véhicule sont mesurées avec un récepteur GPS du système de mesure de position à assistance satellitaire installé sur le véhicule et un autre installé sur la cible et les positions de la cible sont transmises au véhicule, de préférence par voie hertzienne.
